# FASCICULE DE BREVET EUROPEEN

(11) **EP 3 833 211 B1**
(45) Date de publication et mention de la délivrance du brevet: **07.06.2023**
(21) Numéro de dépôt: 19752184.2
(22) Date de dépôt: 08.08.2019
(51) Int. Cl.: A45C 5/14

(54) **PROCÉDÉ POUR RÉALISER UN BAGAGE, EN PARTICULIER UN SAC DE VOYAGE SOUPLE OU SEMI-RIGIDE**
GEPÄCKARTIKEL UND VERFAHREN ZUR HERSTELLUNG
METHOD OF MANUFACTURING A PIECE OF LIGGAGE

(30) Priorité: 10.08.2018 FR 1857439
(43) Date de publication de la demande: 16.06.2021
(73) Titulaire: Louis Vuitton Malletier, 75001 Paris (FR)
(72) Inventeur: NEWSON, Marc, Londres SW1P 1BB (GB)
(74) Mandataire: Plasseraud IP
(86) Numéro de dépôt international: PCT/EP2019/071376
(87) Numéro de publication internationale: WO 2020/030765

(56) Documents cités:
- EP-A2- 3 143 898
- WO-A1-2016/053387

## Description

### Domaine de l'invention

La présente invention concerne un procédé pour réaliser un bagage, en particulier pour réaliser un bagage de type sac de voyage souple ou semirigide.

### Contexte de l'invention

La réalisation d'un bagage de type sac de voyage souple ou semisouple comprend généralement la réalisation de différents éléments distincts, puis l'assemblage des différents éléments par collage ou couture dans une pluralité de zones de jonction et le masquage des différentes zones de jonctions par un jonc. WO 2016/053387 et EP 3143898 sont deux examples de bagages de l'art antérieur.

La présente invention vise à améliorer la robustesse du bagage, son harmonie esthétique et simplifier sa réalisation.

### Exposé de l'invention

Conformément à l'invention, le procédé comprend les opérations suivantes :
a) réalisation d'une enveloppe en une seule pièce présentant une surface interne et une surface externe, l'enveloppe étant souple, l'enveloppe comportant un logement et un rabat, le rabat étant apte à être placé dans une position rabattue dans laquelle l'enveloppe présente un volume intérieur (délimité par la surface interne) et une fente, la fente s'étendant entre le logement et le rabat, la fente étant unique et continue, l'enveloppe étant entièrement réalisée par tricotage en utilisant au moins un fil structurel et
b) fixation d'un dispositif d'obturation sur le logement et le rabat au niveau de la fente.

On comprend par réalisation d'une enveloppe en une seule pièce le fait que l'enveloppe n'est pas réalisée à partir de plusieurs éléments distincts, mais directement en une seule pièce, de sorte qu'il n'existe pas de discontinuité de matière, en particulier pas de couture, collage ou analogue.

Ainsi, le bagage étant dépourvu de la pluralité de zones de jonction, la faiblesse mécanique due à pluralité de ces zones de jonctions est réduite. En outre, il est possible de réaliser un motif répétitif avec une répétition uniforme sur une plus grande étendue du bagage. Enfin, il n'y a qu'une pièce à réaliser pour former l'enveloppe.

Ainsi, l'au moins un fil s'étend continûment sur l'ensemble de l'enveloppe tout en permettant d'obtenir une enveloppe conformable en trois dimensions, pour une grande variété de formes d'enveloppe.

Selon une caractéristique complémentaire conforme à l'invention, de préférence l'au moins un fil structurel est tricoté avec une première densité dans une première zone de l'enveloppe et l'au moins un fil structurel est tricoté avec une deuxième densité dans une deuxième zone de l'enveloppe, la deuxième densité étant supérieure à la première densité. La deuxième densité est de préférence sensiblement le double de la première densité, voire plus du double de la première densité.

Ainsi, la deuxième zone est renforcée par rapport à la première zone, ce qui permet d'améliorer la robustesse du bagage, tout en réduisant le coût et le poids par rapport à un bagage dont l'enveloppe serait entièrement réalisée avec la deuxième densité.

Selon encore une autre caractéristique complémentaire conforme à l'invention, de préférence la réalisation de l'enveloppe lors de l'opération a) comprend l'utilisation d'au moins deux fils structurels de couleurs différentes.

Ainsi, en faisant apparaitre chacune des couleurs sur l'enveloppe suivant un motif prédéfini, le bagage est directement réalisé avec le motif souhaité. Les deux fils de couleurs différentes peuvent soit être aboutés à la suite l'une de l'autre, soit être tricotés ensemble de manière connue notamment dans le domaine du tricotage de laine, de sorte que le motif envers sera l'opposé du motif endroit.

Selon une autre caractéristique conforme à l'invention, de préférence la réalisation de l'enveloppe lors de l'opération a) comprend l'utilisation d'un matériau polymère thermoplastique, de préférence en copolyester ou copolyamide, puis le thermoformage de l'enveloppe.

Ainsi, la souplesse du bagage peut être adaptée en faisant varier la quantité de matériau polymère thermoplastique utilisée dans l'enveloppe, une présence élevée de matériau polymère thermoplastique tend notamment à permettre au bagage de rester en forme et de ne pas s'affaisser.

Selon une autre caractéristique conforme à l'invention, la réalisation de l'enveloppe lors de l'opération a) comprend l'utilisation d'un matériau structurel en polyamide.

L'utilisation de polyamide est avantageuse pour la résistance à l'usure et à l'abrasion du bagage et permet une réalisation relativement aisée.

De préférence, conformément à l'invention, la réalisation de l'enveloppe lors de l'opération a) comprend :
- la réalisation du logement avec une face principale, une première face longitudinale, une deuxième face longitudinale, une première face transversale et une deuxième face transversale,
- la réalisation du rabat sous forme sensiblement plane, correspondant de préférence à la face principale, et
- le rabat est apte à être placé dans une position ouverte dans laquelle le rabat est sensiblement dans le prolongement de la deuxième face transversale et dans la position rabattue, la fente s'étendant autour du rabat et uniquement le long de la première face longitudinale, de la deuxième face longitudinale et de la première face transversale.

Ainsi, la réalisation de l'enveloppe est facilitée.

Selon une autre caractéristique conforme à l'invention, de préférence lors de l'opération b) une coque rigide est fixée au logement et au rabat, de part et d'autre de la fente, sur l'ensemble de la fente.

Ainsi, non seulement la coque rigide permet d'augmenter la solidité du bagage et donc d'accroitre le poids transportable et/ou le volume intérieur du bagage, mais en outre elle permet de maintenir l'enveloppe de part et d'autre de la fente.

Selon une caractéristique complémentaire conforme à l'invention, la coque rigide est de préférence fixée sur la face interne de l'enveloppe.

Ainsi, la face externe de l'enveloppe reste visible.

En outre, de préférence, conformément à l'invention, le procédé comprend :
- lors de l'opération a), réalisation de la fente en forme de U comprenant deux portions longitudinales reliées par une portion transversale, et
- lors de l'opération b), fixation d'un dispositif de traction sur la surface externe de l'enveloppe, le dispositif de traction formant dispositif d'obturation et recouvrant l'ensemble de la fente.

Ainsi, le bagage peut être déplacé en le tirant grâce au dispositif de traction et le dispositif de traction dissimule la fente.

De manière complémentaire, conformément à l'invention, le procédé comprend de préférence en outre les caractéristiques suivantes :
- le dispositif de traction comprend une canne télescopique, deux tubes et une plaque de protection, la canne télescopique comporte deux bras et une poignée reliant les bras, les bras de la canne télescopique sont montés coulissants dans les tubes entre une position repliée et une position déployée de la canne,
- les tubes sont fixés sur la surface externe de l'enveloppe et recouvrent les portions longitudinales de la fente, et
- la plaque de protection est fixée sur la surface externe de l'enveloppe et recouvre la portion transversale de la fente.

Ainsi, la canne peut être placée tant dans une position repliée lorsqu'elle n'est pas nécessaire que dans une position déployée pour tirer le bagage, tout en conservant la fente dissimulée.

Selon une autre caractéristique conforme à l'invention, le procédé comprend de préférence les opérations suivantes :
- réalisation d'une ouverture d'accès par découpe dans l'enveloppe, et
- fixation d'une fermeture à glissière dans l'ouverture d'accès.

Ainsi, l'ouverture d'accès est déterminée pour permettre un usage ergonomique du bagage indépendamment des contraintes de positionnement de la fente dues à la réalisation de l'enveloppe.

L'ouverture d'accès définit de préférence un volet souple pouvant être déplacé pour faciliter l'accès au volume intérieur.

Selon encore une autre caractéristique conforme à l'invention, le procédé comprend de préférence les opérations suivantes :
- réalisation d'une incision par découpe dans l'enveloppe,
- insertion d'une portion de fixation d'un accessoire à travers l'incision,
- dépôt de colle entre la portion de fixation de l'accessoire à l'enveloppe, et
- couture de la portion de fixation de l'accessoire à l'enveloppe à proximité de l'incision.

Ainsi, l'accessoire est fixé à l'enveloppe de manière robuste et esthétique, le collage n'étant pas visible. L'accessoire est de préférence une sangle de portage ou une poche de rangement.

Selon une caractéristique complémentaire, la découpe dans l'enveloppe est de préférence réalisée par ultrasons.

### Brève description des figures

D'autres caractéristiques et avantages de la présente invention apparaîtront dans la description détaillée suivante, se référant aux dessins annexés dans lesquels :
- FIG. 1 illustre un bagage conforme à l'invention vu de dessus en perspective,
- FIG. 2 illustre un bagage conforme à l'invention vu de derrière en perspective,
- FIG. 3 illustre en perspective une enveloppe réalisée lors d'une première opération de procédé pour réaliser le bagage conformément à l'invention,
- FIG. 4 illustre l'enveloppe dans une configuration différente,
- FIG. 5 illustre la structure de l'enveloppe,
- FIG. 6 illustre une deuxième opération de réalisation du bagage conformément à l'invention,
- FIG. 7 illustre une troisième opération de réalisation du bagage conformément à l'invention,
- FIG. 8 illustre en perspective éclatée une quatrième opération de réalisation du bagage conformément à l'invention
- Fig. 9 illustre à échelle agrandie la zone repérée IX à la figure 8.

### Description détaillée de l'invention

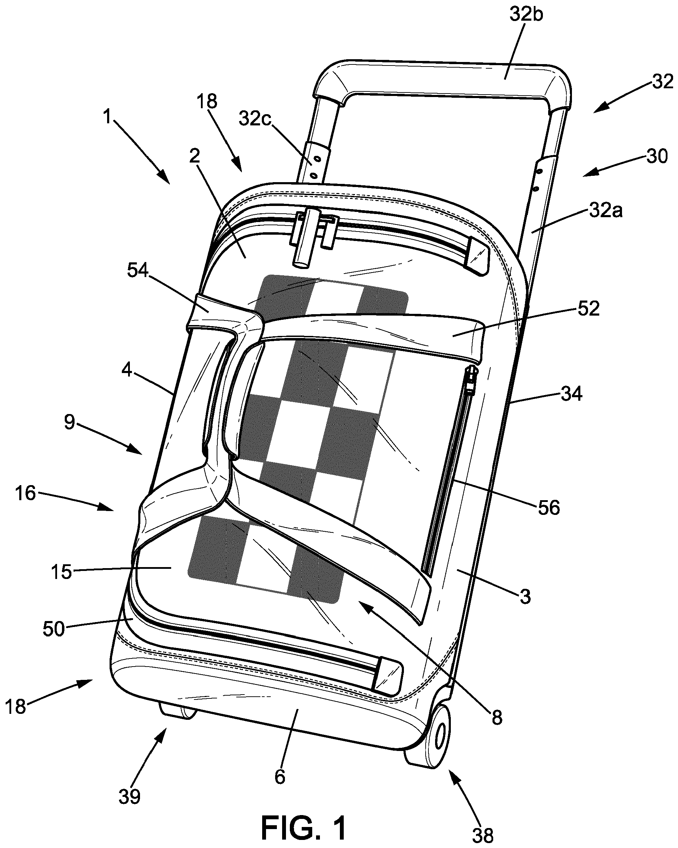

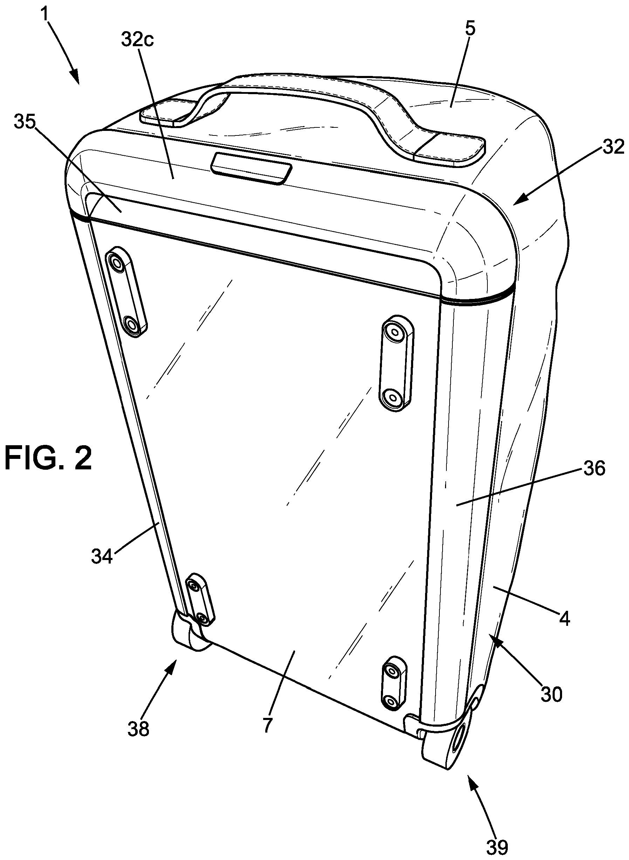

Les figures 1 et 2 illustrent un bagage 1 comprenant un réceptacle 9 destiné à contenir des affaires et un dispositif de traction 30 destiné à déplacer le réceptacle 9.

Le réceptacle 9 est de forme sensiblement parallélépipédique et comprend une face principale 2, une face arrière 7 opposée à la face principale, une première face longitudinale 3, une deuxième face longitudinale 4, une première face transversale 5 et une deuxième face transversale 6.

Le réceptacle 9 présente une fermeture à glissière 50 s'étendant essentiellement dans la face principale 2 et permettant de libérer un volet d'accès 15, souple pour accéder à l'intérieur du réceptacle 9. Le réceptacle 9 est équipé de deux sangles de portage 52, 54 pour son portage et une poche 56 formant accessoires. Le réceptacle 9 présente une première zone 16 et une deuxième zone 18. La séparation entre la première zone 16 et la deuxième zone 18 est illustrée par deux lignes de tirets disposées de part et d'autre d'une ligne en trait continu. La deuxième zone 18 s'étend dans la face arrière 7 et à proximité de la face arrière 7, plus précisément dans la face arrière 7, dans la première face transversale 5 et dans la deuxième face transversale 6 dans le mode de réalisation illustré.

Le dispositif de traction 30 comprend une canne télescopique 32, un premier tube 34, un deuxième tube 36 et une plaque de protection 35. La canne télescopique 32 comporte deux bras 32a, 32c et une poignée 32b reliant les bras 32a, 32c. Les bras 32a, 32c de la canne télescopique 32 sont montés coulissants dans les tubes 34, 36 entre une position repliée (illustrée à la figure 2) et une position déployée de la canne 32 (illustrée à la figure 1).

Le premier tube 34 s'étend suivant un bord du bagage joignant la face arrière 7 et la première face longitudinale 3, le premier tube 34 s'étend en partie en regard de la face arrière 7 et en partie en regard de la première face longitudinale 3. Le deuxième tube 36 est parallèle au premier tube 34 et s'étend suivant un bord du bagage joignant la face arrière 7 et la deuxième face longitudinale 4, le deuxième tube 36 s'étend en partie en regard de la face arrière 7 et en partie en regard de la deuxième face longitudinale 4. La plaque de protection 35 s'étend suivant un bord du bagage joignant la face arrière 7 et la première face transversale 5, la plaque de protection 35 s'étend en partie en regard de la face arrière 7 et en partie en regard de la première face transversale 5. La plaque de protection 35 relie le premier tube 34 et le deuxième tube 36.

Le dispositif de traction 30 comprend en outre une première roulette 38 et une deuxième roulette 39. La première roulette est fixée dans un coin du réceptacle 9 formé par la jonction de la face principale 2, de la première face longitudinale 3 et de la deuxième face transversale 6. La deuxième roulette 39 est fixée dans un coin du réceptacle 9 formé par la jonction de la face principale 2, de la deuxième face longitudinale 4 et de la deuxième face transversale 6. En variante, le bagage 1 pourrait comprendre deux autres roulettes.

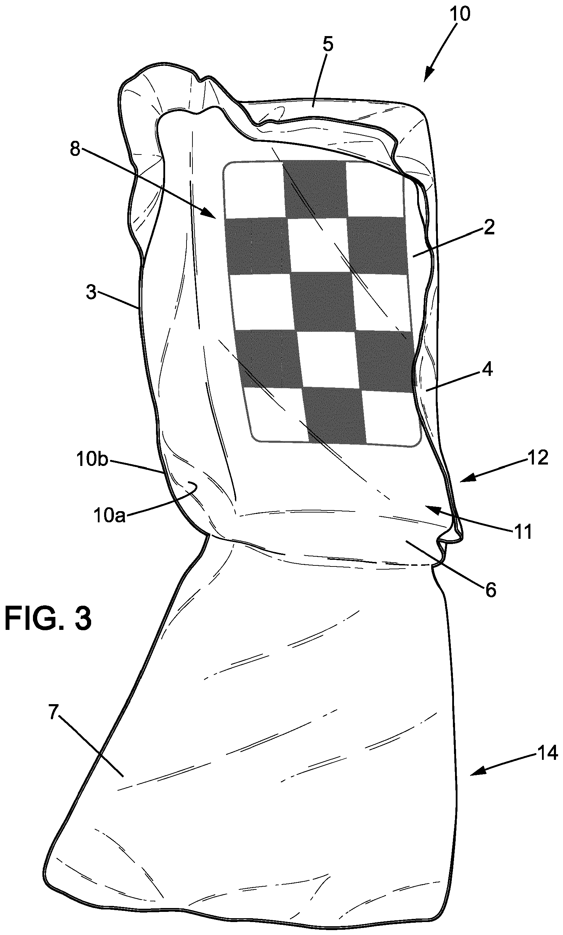

Les figures 3 à 9 illustrent la réalisation du bagage 1. Telle qu'illustrée aux figures 3 à 5, la réalisation du bagage 1 comprend la réalisation d'une enveloppe 10. L'enveloppe 10 présente une surface interne 10a et une surface externe 10b. L'enveloppe 10 est réalisée directement d'une seule pièce avec continuité de matière et est souple.

L'enveloppe 10 intègre la face principale 2, la première face longitudinale 3, la deuxième face longitudinale 4, la première face transversale 5, la deuxième face transversale 6 et la face arrière 7. L'enveloppe 10 comprend un logement 12 et un rabat 14. Dans le mode de réalisation illustré, le rabat 14 définit sensiblement la face arrière 7.

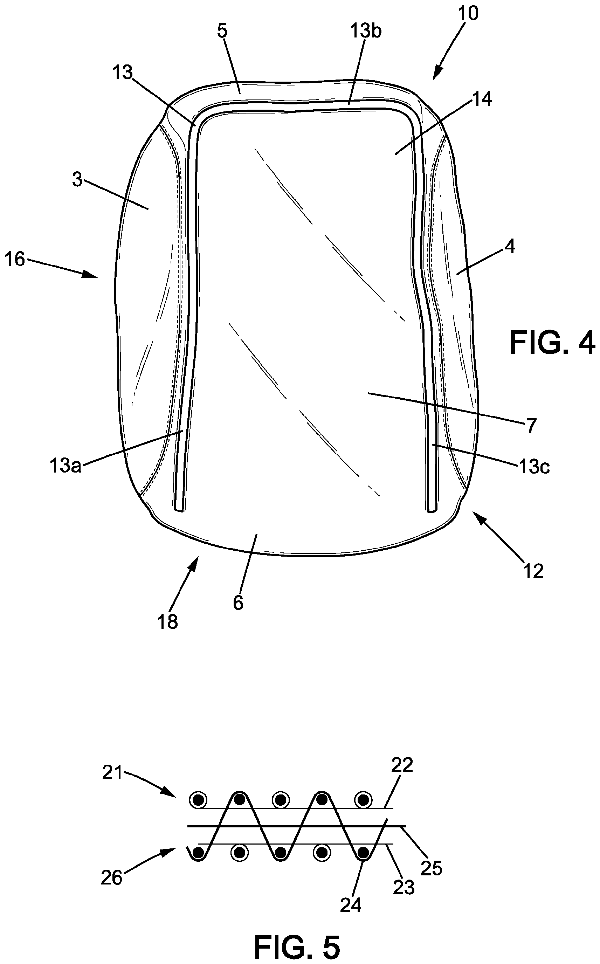

Le rabat 14 est apte à être déplacée entre une position ouverte illustrée à la figure 3 et une position rabattue illustré à la figure 4. Dans la position ouverte, le rabat 14 est sensiblement plat et s'étend sensiblement dans le prolongement de la deuxième face transversale 6. La position ouverte correspond de préférence à la position dans laquelle est réalisée l'enveloppe 10. Dans la position rabattue, le rabat 14 s'étend en regard de la face principale 2 et une fente 13 s'étend entre le rabat 14 et le logement 12. L'enveloppe 10 présente un volume intérieur 11 qui est séparé de l'extérieur par le logement 12 et le rabat 14. Dans la position rabattue, le volume intérieur 11 ne peut communiquer avec l'extérieur que par l'unique fente 13.

La fente 13 présente une forme en U comportant une première portion longitudinale 13a, une portion transversale 13b et une deuxième portion longitudinale 13c. La première portion longitudinale 13a de la fente 13 s'étend suivant le bord joignant la face arrière 7 et la première face longitudinale 3. La portion transversale 13b de la fente 13 s'étend suivant le bord joignant la face arrière 7 et la première face transversale 5. La deuxième portion longitudinale 13c de la fente 13 s'étend suivant le bord joignant la face arrière 7 et la deuxième face longitudinale 4.

L'enveloppe 10 est formée d'une succession de lignes de boucles liées les unes aux autres de manière souple, de sorte que la déformation des boucles procure à l'enveloppe sa souplesse tridimensionnelle. Dans le mode de réalisation illustré, l'enveloppe 10 est réalisée par tricotage tridimensionnel sans couture. De préférence, tel qu'illustré à la figure 5, l'enveloppe comprend un premier fil structurel 22, un deuxième fil structurel 23, un fil élastique 24 et un fil en matériau thermoplastique thermofusible 25.

Il faut comprendre par matériau "thermoplastique" un polymère thermoplastique qui, d'une façon répétée, fond lorsqu'il est chauffé au-dessus d'une certaine température, et qui redevient solide en-dessous de cette température.

Le premier fil structurel 22 et le deuxième fil structurel 23 s'étendent chacun continûment sur l'ensemble de l'enveloppe. Le premier fil structurel 22 s'étend suivant une première fonture 21 et le deuxième fil structurel 23 s'étend suivant une deuxième fonture 26. La première fonture 21 correspond à la surface interne 10a de l'enveloppe 10 et la deuxième fonture 26 correspond à la face externe 10b de l'enveloppe 10. On procède à des allers-retours avec le premier fil structurel 22 et le deuxième fil structurel 23 fils entre la première fonture 21 et la deuxième fonture 26, suivant un schéma déterminé correspondant à la structure de maille souhaitée. En faisant passer le premier fil structurel 22 de la première fonture 21 à la deuxième fonture 26 et en faisant passer le deuxième fil structurel 23 de la deuxième fonture 26 à de la première fonture 21, on forme un motif 8 par alternance d'aspect. Le motif apparaissant sur la surface interne 10a est l'inverse du motif apparaissant sur la surface externe 10b. Dans le mode de réalisation illustré, le motif est formé sur la face principale 2.

Le fil élastique 24 est optionnel, mais permet d'éviter que l'enveloppe 10 après tricotage s'affaisse complètement sous son propre poids de faciliter la réalisation du bagage de manière harmonieuse (d'améliorer l'esthétique) et d'améliorer la liaison entre la surface interne 10a de l'enveloppe 10, la surface externe 10b de l'enveloppe 10 et le coeur formé par le fil en matériau thermoplastique thermofusible 25 dans le mode de réalisation illustré. Le fil élastique 24 passe alternativement de la première fonture 21 à la deuxième fonture 26.

Le fil en matériau thermoplastique thermofusible 25 est maintenu entre la première fonture 21 et la deuxième fonture 26.

L'enveloppe 10 présente une première zone 16 et une deuxième zone 18. Dans la deuxième zone 18, les points de tricotage sont plus resserrés que dans la première zone 16, créant une plus grande densité de points formés avec le premier fil structurel 22 et avec le deuxième fil structurel 23. En particulier, dans la deuxième zone 18, l'écartement entre les aiguilles ayant été réduit de moitié, les points avec le premier fil structurel 22 et avec le deuxième fil structurel 23 sont deux fois plus proches, générant une densité double. La deuxième zone 18 s'étendant sur l'ensemble de la deuxième face transversale 6 et déborde légèrement sur la première face longitudinale 3 et la deuxième face longitudinale 4.

Bien entendu, le premier fil structurel 22, le deuxième fil structurel 23, le fil élastique 24 et le fil en matériau thermoplastique thermofusible 25 pourraient être tricotés pour former différents points et de manière différente de la configuration illustré à la figure 5, ces différents points pouvant notamment permettre de faire varier la densité des points formés avec le premier fil structurel 22 et/ou le deuxième fil structurel 23.

En variante, l'enveloppe pourrait ne comprendre que le premier fil structurel 22 ou un unique fil composé alternativement de portions du premier fil structurel 22 et de portions du deuxième fil structurel 23 aboutées. Le premier fil structurel 22 et le deuxième fil structurel 23 présentent un aspect différent, en particulier une couleur différente.

Pour de plus amples informations sur la technique de réalisation de tricotage tridimensionnel sans couture, on pourra se reporter à différents documents décrivant cette technique et notamment "Three dimensional seamless garment knitting on V-bed flat knitting machines" écrit par Wonseok Choi et Nancy B. Powell et publié dans Journal of textile and apparel, technology and management, Volume 4, Issue 3, Spring 2005.

Le premier fil structurel 22 et le deuxième fil structurel 23 sont de préférence réalisés en polyamide, en particulier en polyamide 6-6 connu sous la dénomination nylon^{®}. En variante, le premier fil structurel 22 et le deuxième fil structurel 23 pourraient notamment être réalisés en polyester, acrylique, coton, acétate, lin. Le fil élastique 24 est de préférence réalisé à base de polyamide et élasthanne. Le fil thermoplastique thermofusible 25 est de préférence réalisé en copolyester (TPEE) ou en copolyamide.

Après avoir été réalisée, l'enveloppe 10 est de préférence lavée et imprégnée de résine afin de lui conférer un traitement déperlant antitaches.

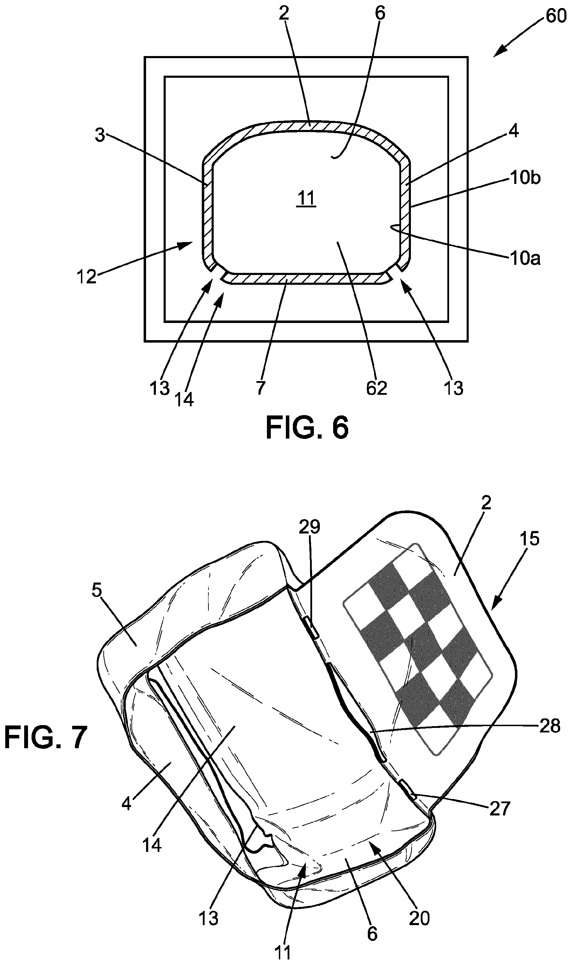

Puis, tel qu'illustré à la figure 6, une préforme ou un noyau 62 est placé dans le volume intérieur 11 de l'enveloppe 10 en contraignant légèrement l'enveloppe 10, afin de lui conférer la forme souhaitée. Le noyau 62 et l'enveloppe 10 sont placés dans un four 60 à une température de préférence légèrement inférieure à 200 degrés pendant une quinzaine à une quarantaine de minutes. La température du four 60 doit être suffisamment basse pour ne pas détériorer le matériau du fil thermoplastique thermofusible 25, ni faire fondre le premier fil structurel 22 ou le deuxième fil structurel 23. En fonction de la proportion de fil thermoplastique thermofusible 25 présent dans l'enveloppe 10, ainsi que de la matière du fil thermoplastique thermofusible 25, après thermoformage l'enveloppe 10 est plus ou moins rigide.

Le processus de thermoformage du tricot est le suivant :
- dressage de l'enveloppe 10 sur le noyau 62 correspondant aux surfaces techniques utilisées pour le développement des éléments de structures telles que les coques notamment ;
- le noyau 62 coiffé de l'enveloppe 10 est ensuite introduit dans un four 60 pendant 15 à 40 minutes entre 180°C et 190°C ; l'objectif est d'activer les éléments chimiques composant le traitement anti-pluie puis le fil thermoplastique thermofusible 25 ;
- à la sortie du four, une mise sous vide est réalisée afin de plaquer l'enveloppe 10 sur le noyau 62 afin de garantir les géométries complexes ; cette mise sous vide est réalisée au moyen d'un cadre créant une poche à vide autour de l'outillage ; le vide étant maintenu pendant 20 minutes, le temps que le fil thermoplastique thermofusible 25 soit redescendu en-dessous de sa température de ramollissement, autrement dit à la température lui permettant de s'être figé ;
- l'enveloppe 10 et le noyau 62 rentrent ensuite dans une chambre froide afin d'accélérer le refroidissement de la pièce, et ainsi permettre de figer la forme de l'enveloppe 10.

Afin d'augmenter la production, le processus de thermoformage peut être effectué sur une ligne de production présentant de multiples postes, plusieurs enveloppes 10 passant successivement d'un poste au suivant ou progressant continûment d'un bout à l'autre de la ligne de production qui forme une boucle fermée.

Tel qu'illustré à la figure 7, une ouverture d'accès 20 est ensuite réalisée par découpe dans le logement 12 et plus précisément dans la face principale 2. L'ouverture d'accès 20 est réalisée en forme de U et définit le bord du volet d'accès 15 pouvant s'ouvrir par flexion. De préférence, l'ouverture d'accès 20 s'étend à proximité d'un bord de l'enveloppe 10 joignant la face principale 2 et la première face transversale 5, sensiblement suivant un bord de l'enveloppe 10 joignant la face principale 2 et la deuxième face longitudinale 4, et à proximité d'un bord de l'enveloppe 10 joignant la face principale 2 et la deuxième face transversale 6. La flexion pour ouvrir et fermer le volet d'accès 15 s'effectue sensiblement suivant un bord de l'enveloppe 10 joignant la face principale 2 et la première face longitudinale 3.

En outre des incisions 27, 28, 29 sont ensuite réalisées dans l'enveloppe 10 à proximité du bord de l'enveloppe 10 joignant la face principale 2 et la première face longitudinale 3. Une première portion d'extrémité 52a et une deuxième portion d'extrémité 52b de la sangle de portage 52 sont insérées à travers les incisions 27, 29.

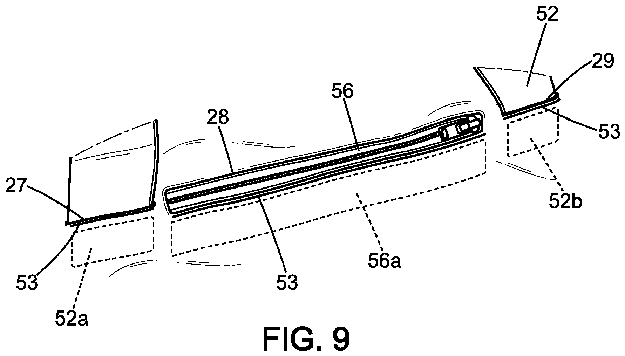

Puis, tel qu'illustré à la figure 9, de la colle est disposée entre la première portion d'extrémité 52a et la surface intérieure 10a de l'enveloppe avant de les presser fortement l'un contre l'autre. De même, de la colle est disposée entre la deuxième portion d'extrémité 52b et la surface intérieure 10a de l'enveloppe avant de les presser fortement l'un contre l'autre. Et, une poche 56 est insérée à travers l'incision 28, de la colle est disposée entre une portion 56a de la poche et la surface intérieure 10a de l'enveloppe avant de les presser fortement l'un contre l'autre. Une couture 53 est ensuite réalisée à proximité des incisions 27, 28, 29, entre les incisions 27, 28, 29 et les dépôts de colle afin de renforcer le maintien de la première portion d'extrémité 52a, la deuxième portion d'extrémité 52b et la portion 56a de la poche 56 sur l'enveloppe 10 et masquer la présence de colle. Il est procédé de même pour la sangle de portage 54.

Une recherche de technologie a été réalisée afin de définir la meilleure option pour réaliser les incisions 27, 28, 29 avec les contraintes suivantes
- les incisions doivent être esthétiquement parfaites afin de ne pas avoir à les recouvrir par un autre élément,
- les incisions ne doivent pas créer de "marche" lorsqu'elles seront recouvertes pas un renfort (qui a pour rôle de garantir les performances mécanique de l'assemblage),
- les incisions doivent garantir un non effilochage du bord découpé.

Pour cela différentes technologies ont été testées, comme :
- jet d'eau, présente l'inconvénient de ne pas garantir l'absence d'effilochage du bord ni un aspect esthétique satisfaisant ;
- laser, présente l'inconvénient de créer une marche prononcée ;
- lame, présente l'inconvénient de ne pas garantir l'absence d'effilochage du bord ni un aspect esthétique satisfaisant ;
- ultra-son, répond au trois contraintes précités, la découpe par ultrasons est notamment avantageuse parce qu'elle ne détériore pas la trame et procure une finition plus nette : en chauffant localement, elle permet un effet de cautérisation. Avec un outil mécanique il y aurait un effilochage. Avec le laser la finition serait moins nette en raison de la température plus élevée.

Les incisions 27, 28, 29 sont donc de préférence réalisées par ultrasons. En variante, les incisions 27, 28, 29 pourraient être réalisées par laser, voire par une lame ou un jet d'eau.

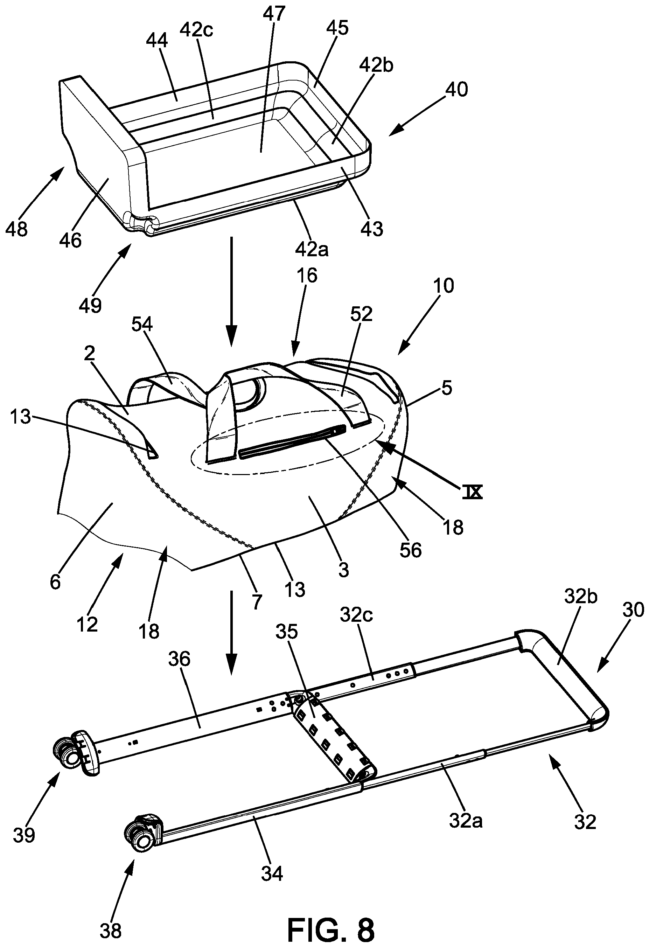

En outre, tel qu'illustré à la figure 8, d'une part une coque 40 est fixée contre la surface intérieure 10a de l'enveloppe 10 et d'autre part le dispositif de traction 30 est fixé contre la surface extérieure 10b de l'enveloppe 10. La coque 40 est monobloc et comprend une partie de base 47 plane, un premier rebord longitudinal 43, un deuxième rebord longitudinal 44, un premier rebord transversal 45, un deuxième rebord transversal 46, ainsi qu'une première portion de raccordement longitudinale 42a, une portion de raccordement transversale 42b et une deuxième portion de raccordement longitudinale 42c.

La première portion de raccordement longitudinale 42a s'étend entre la partie de base 47 et le premier rebord longitudinal 43. La première portion de raccordement longitudinale 42a est concave et de forme complémentaire du premier tube 34. La portion de raccordement transversale 42b s'étend entre la partie de base 47 et le premier rebord longitudinal 43. La portion de raccordement transversale 42b est concave et de forme complémentaire de la plaque de protection 35. La deuxième portion de raccordement longitudinale 42c s'étend entre la partie de base 47 et le deuxième rebord longitudinal 44. La deuxième portion de raccordement longitudinale 42c est concave et de forme complémentaire du premier tube 34.

La coque 40 comprend en outre une première cavité 48 de roulette et une deuxième cavité 49 de roulette.

La partie de base 47 s'étend en regard de toute la face arrière 7 à laquelle elle est fixée. Le deuxième rebord transversal 46 s'étend en regard de la deuxième face transversale 6 à laquelle il est fixé. Le premier rebord longitudinal 43 s'étend en regard d'une partie de la première face longitudinale 3 à laquelle il est fixé. Le premier rebord transversal 45 s'étend en regard d'une partie de la première face transversale 5 à laquelle il est fixé. Le deuxième rebord longitudinal 44 s'étend en regard d'une partie de la deuxième face longitudinale 4 à laquelle il est fixé. La coque 40 est de préférence fixée par collage sur la surface intérieure de l'enveloppe 10, notamment au moyen d'une colle activable à chaud.

La première portion longitudinale 13a de la fente 13 est maintenue entre le premier tube 34 et la première portion de raccordement longitudinale 42a, le premier tube 34 et la première portion de raccordement longitudinale 42a étant chacun fixés à l'enveloppe 10 de part et d'autre de la première portion longitudinale 13a de la fente 13, tant à la face arrière 7 qu'à la première face longitudinale 3 de l'enveloppe 10. De même, la portion transversale 13b de la fente 13 est maintenue entre la plaque de protection 35 et la portion de raccordement transversale 42b, la plaque de protection 35 et la portion de raccordement transversale 42b étant chacun fixés à l'enveloppe 10 de part et d'autre de la portion transversale 13b de la fente 13, tant à la face arrière 7 qu'à la première face transversale 5 de l'enveloppe 10. Et, la deuxième portion longitudinale 13c de la fente 13 est maintenue entre le deuxième tube 36 et la deuxième portion de raccordement longitudinale 42c, le deuxième tube 36 et la deuxième portion de raccordement longitudinale 42c étant chacun fixés à l'enveloppe 10 de part et d'autre de la deuxième portion longitudinale 13c de la fente 13, tant à la face arrière 7 qu'à la deuxième face longitudinale 4 de l'enveloppe 10. Ainsi, le dispositif de traction 30 obture complètement la fente 13.

En outre, la fermeture à glissière 50 est fixée dans l'ouverture d'accès 20, afin de pouvoir obturer l'ouverture d'accès 20.

La figure 9 illustre la fixation par collage de la poche 56 sur l'enveloppe 10 et des sangles de portage 52, 54 sur l'enveloppe 10. La fermeture à glissière 50 peut être fixée sur l'enveloppe 10 de manière analogue à la poche 56 et aux sangles de portage 52, 54.

Ces deux assemblages collés sont réalisés de préférence à l'aide d'une colle thermodurcissable, afin de garantir la tenue et la non-dégradation de l'assemblage dans le temps. Un tel collage est performant : un côté d'une sangle de portage résiste à 150kg d'effort avant que l'assemblage ne rompe. Mais, les contraintes liées à ce type de collage sont le besoin d'appliquer de la chaleur (120/130°C à coeur dans la colle) pour fluidifier la colle ainsi que de la pression pour lui permettre de mouiller les deux supports. Ces opérations de mises en température peuvent avoir un impact sur les enveloppes qui ont des propriétés sensibles aux températures de 110°C. Un déphasage du processus de collage a été développé pour permettre de conserver les mêmes performances mécaniques tout en garantissant de ne pas dégrader l'enveloppe. Pour cela, les opérations qui se faisaient habituellement de façon simultanée, ont été décalées. Autrement dit :
- montée en température (chauffage par un élément chauffant) de la colle sans contact de l'élément chauffant avec l'enveloppe 10, puis
- mise en pression de la fermeture à glissière 50 sur l'enveloppe 10, de la poche 56 et des sangles de portage 52, 54 sur l'enveloppe 10 par un élément à température ambiante ou du moins à température inférieure à celle de l'élément chauffant.

D'autre part, l'enveloppe 10 est fixée sur la coque 40 de préférence au moyen d'une colle polyuréthane déposée par fibérisation, Cette technologie permet de déposer la colle à chaud sur la coque 40, puis de redevenir sèche et sans adhésion instantanée au touché, notamment en limitant fortement le grammage. Cela permet ainsi de venir dresser l'enveloppe 10 sur la coque 40.

L'ensemble est ensuite placé dans une poche de mise sous vide afin d'exercer les pressions sur l'ensemble des zones encollées, la poche de mise sous vide avec l'enveloppe 10 dressée sur la coque 40 sont placés dans un four à 80°C. Cette température est un compromis entre les différentes températures d'activation des éléments et le temps de montée en température de la colle pour la rendre liquide et lui permettre de mouiller les deux supports.

Les performances obtenues avec ce type d'assemblage sont supérieures au piquage, lors des essais au banc de traction pour évaluer la tenue au cisaillement, l'enveloppe 10 est déformée de manière plastique (irréversible) et l'assemblage rompt à 50kg pour une surface d'assemblage de 1,5x2,5cm.

Enfin, une doublure (non représentée) préformée, notamment en polyester et/ou polyuréthane est de préférence fixée sur la coque 40, à l'intérieur de la coque 40.

Bien entendu l'invention n'est nullement limitée au(x) mode(s) de réalisation décrit(s) à titre illustratif, non limitatif. Ainsi, même si cela n'est pas préféré, le dispositif d'obturation pourrait être formé par la fermeture à glissière 50. Autrement dit, la fermeture à glissière 50 pourrait être placée dans la fente 13. Le rabat 14 formerait alors volet permettant d'accéder au volume intérieur 11. La fermeture à glissière 50 formerait tout autant un élément d'obturation permettant d'obturer le volume intérieur 11, en obturant la fente 13.

Par ailleurs, au lieu d'être tricotée, l'enveloppe pourrait être formée à partir d'un élément structurel ajouré et déformable. La matière thermoplastique optionnelle servant à rigidifier l'enveloppe pourrait être apportée en recouvrant l'élément structurel d'une couche en matériau polymère thermoplastique. Les ajours dans l'élément structurel pourraient être réalisés par découpage laser ou poinçonnage, afin de former des boucles s'étendant dans deux directions du type illustré dans le document EP0806190A1.

## Revendications

1. Procédé pour réaliser un bagage (1), ledit procédé comprenant les opérations suivantes :
a) réalisation d'une enveloppe (10) en une seule pièce présentant une surface interne (10a) et une surface externe (10b), l'enveloppe étant souple, l'enveloppe comportant un logement (12) et un rabat (14), le rabat (14) étant apte à être placé dans une position rabattue dans laquelle l'enveloppe présente un volume intérieur (11) et une fente (13) s'étendant entre le logement (12) et le rabat (14), la fente (13) étant unique et continue, l'enveloppe (10) étant entièrement réalisée par tricotage en utilisant au moins un fil structurel (22, 23) et
b) fixation d'un dispositif d'obturation (30) sur le logement (12) et le rabat (14) au niveau de la fente (13).

2. Procédé selon l'une la revendication 1 dans lequel l'au moins un fil structurel (22, 23) est tricoté avec une première densité dans une première zone (16) de l'enveloppe (10) et l'au moins un fil structurel (22, 23) est tricoté avec une deuxième densité dans une deuxième zone (18) de l'enveloppe (10), la deuxième densité étant supérieure à la première densité, de préférence sensiblement le double de la première densité.

3. Procédé selon l'une quelconque des revendications 1 et 2 dans lequel la réalisation de l'enveloppe lors de l'opération a) comprend l'utilisation de deux fils structurels (22, 23) de couleurs différentes.

4. Procédé selon l'une quelconque des revendications 1 à 3 dans lequel :
- la réalisation de l'enveloppe (10) lors de l'opération a) comprend l'utilisation d'un polymère thermoplastique (26), de préférence en copolyester ou copolyamide, puis
- le thermoformage de l'enveloppe (10).

5. Procédé selon l'une quelconque des revendications 1 à 4 dans lequel la réalisation de l'enveloppe (10) lors de l'opération a) comprend l'utilisation d'un matériau structurel (22) en polyamide.

6. Procédé selon l'une quelconque des revendications 1 à 5 dans lequel la réalisation de l'enveloppe lors de l'opération a) comprend :
- la réalisation du logement (12) avec une face principale (2), une première face longitudinale (3), une deuxième face longitudinale (4), une première face transversale (5) et une deuxième face transversale (6),
- la réalisation du rabat (14) sous forme sensiblement plane, et
- le rabat (14) est apte à être placé dans une position ouverte dans laquelle le rabat (14) est sensiblement dans le prolongement de la deuxième face transversale (6) et dans la position rabattue, la fente (13) s'étendant autour du rabat (14) et uniquement le long de la première face longitudinale (3), de la deuxième face longitudinale (4) et de la première face transversale (5),.

7. Procédé selon l'une quelconque des revendications 1 à 6 dans lequel lors de l'opération b) une coque rigide (40) est fixée au logement (12) et au rabat (14), de part et d'autre de la fente (13), sur l'ensemble de la fente (13).

8. Procédé selon la revendication 7 dans lequel la coque rigide (40) est fixée sur la surface interne (10a) de l'enveloppe (10).

9. Procédé selon l'une quelconque des revendications 1 à 8 comprenant :
- lors de l'opération a), réalisation de la fente (13) en forme de U comprenant deux portions longitudinales (13a, 13c) reliées par une portion transversale (13b), et
- lors de l'opération b), fixation d'un dispositif de traction (30) sur la surface externe (10b) de l'enveloppe (10), le dispositif de traction (30) formant dispositif d'obturation et recouvrant l'ensemble de la fente (13).

10. Procédé selon la revendication 9, dans lequel :
- le dispositif de traction (30) comprend une canne télescopique (32), deux tubes (34, 36) et une plaque de protection (35), la canne télescopique (32) comporte deux bras (32a, 32c) et une poignée (32b) reliant les bras (32a, 32c), les bras (32a, 32c) de la canne télescopique (32) sont montés coulissants dans les tubes (34, 36) entre une position repliée et une position déployée de la canne (32),
- les tubes (34, 36) sont fixés sur la surface externe (10b) de l'enveloppe (10) et recouvrent les portions longitudinales (13a, 13c) de la fente (13), et
- la plaque de protection (35) est fixée sur la surface externe (10b) de l'enveloppe (10) et recouvre la portion transversale (13b) de la fente (13).

11. Procédé selon l'une quelconque des revendications 1 à 10 comprenant les opérations suivantes :
- réalisation d'une ouverture d'accès (20) par découpe dans l'enveloppe (10), et
- fixation d'une fermeture à glissière (50) dans l'ouverture d'accès (20).

12. Procédé selon l'une quelconque des revendications précédentes comprenant les opérations suivantes :
- réalisation d'une incision (27, 28, 29) par découpe dans l'enveloppe (10),
- insertion d'une portion de fixation (52a, 52b ; 56a) d'un accessoire (52, 56) à travers l'incision (27, 28 ; 29),
- dépôt de colle entre la portion de fixation (52a, 52b ; 56a) de l'accessoire (52, 56) à l'enveloppe (10), et
- couture (53) de la portion de fixation (52a, 52b ; 56a) de l'accessoire (52, 56) à l'enveloppe (10) à proximité l'incision (27, 28, 29).

13. Procédé selon l'une quelconque des revendications 11 et 12, dans lequel l'enveloppe (10) est découpée par ultrasons.

## Patentansprüche

1. Verfahren zum Herstellen eines Gepäckstücks (1), wobei das Verfahren die folgenden Arbeitsschritte umfasst:
a) Herstellen einer Hülle (10) in einem Stück, die eine Innenfläche (10a) und eine Außenfläche (10b) aufweist, wobei die Hülle flexibel ist, die Hülle ein Gehäuse (12) und eine Klappe (14) umfasst, wobei die Klappe (14) ausgelegt ist, in einer zusammengeklappten Position platziert zu werden, in der die Hülle ein Innenvolumen (11) und einen Schlitz (13) aufweist, der sich zwischen dem Gehäuse (12) und der Klappe (14) erstreckt, wobei der Schlitz (13) einzeln und durchgehend ist, wobei die Hülle (10) vollständig durch Stricken unter Verwendung mindestens eines Strukturgarns (22, 23) hergestellt ist, und
b) Befestigen einer Verschlussvorrichtung (30) an dem Gehäuse (12) und der Klappe (14) in Höhe des Schlitzes (13).

2. Verfahren nach Anspruch 1, wobei das mindestens eine Strukturgarn (22, 23) in einem ersten Bereich (16) der Hülle (10) mit einer ersten Dichte gestrickt ist und das mindestens eine Strukturgarn (22, 23) in einem zweiten Bereich (18) der Hülle (10) mit einer zweiten Dichte gestrickt ist, wobei die zweite Dichte größer als die erste Dichte ist, vorzugsweise im Wesentlichen das Doppelte der ersten Dichte beträgt.

3. Verfahren nach einem der Ansprüche 1 und 2, wobei das Herstellen der Hülle während des Arbeitsschritts a) das Verwenden von zwei Strukturgarnen (22, 23) mit unterschiedlichen Farben umfasst.

4. Verfahren nach einem der Ansprüche 1 bis 3, wobei:
- das Herstellen der Hülle (10) während des Arbeitsschritts a) das Verwenden eines thermoplastischen Polymers (26), vorzugsweise Copolyester oder Copolyamid, umfasst, dann
- das Thermoformen der Hülle (10).

5. Verfahren nach einem der Ansprüche 1 bis 4, wobei das Herstellen der Hülle (10) während des Arbeitsschritts a) das Verwenden eines Strukturmaterials (22) aus Polyamid umfasst.

6. Verfahren nach einem der Ansprüche 1 bis 5, wobei das Herstellen der Hülle während des Arbeitsschritts a) Folgendes umfasst:
- das Herstellen des Gehäuses (12) mit einer Hauptseite (2), einer ersten Längsseite (3), einer zweiten Längsseite (4), einer ersten Querseite (5) und einer zweiten Querseite (6),
- das Herstellen der Klappe (14) mit einer im Wesentlichen flachen Form, und
- wobei die Klappe (14) ausgelegt ist, um in eine offene Position, in der sich die Klappe (14) im Wesentlichen in Verlängerung mit der zweiten Querseite (6) befindet, und in die zusammengeklappte Position platziert zu werden, wobei der Schlitz (13) sich um die Klappe (14) herum und lediglich über die Länge der ersten Längsseite (3), der zweiten Längsseite (4) und der ersten Querseite (5) erstreckt.

7. Verfahren nach einem der Ansprüche 1 bis 6, wobei während des Arbeitsschritts b) eine Hartschale (40) an dem Gehäuse (12) und der Klappe (14) auf beiden Seiten des Schlitzes (13) über den gesamten Schlitz (13) hinweg befestigt wird.

8. Verfahren nach Anspruch 7, wobei die Hartschale (40) an der Innenfläche (10a) des Gehäuses (10) befestigt ist.

9. Verfahren nach einem der Ansprüche 1 bis 8, umfassend:
- während des Arbeitsschritts a) Herstellen (13 des U-förmigen Schlitzes), der zwei Längsabschnitte (13a, 13c) umfasst, die durch einen Querabschnitt (13b) verbunden sind, und
- während des Arbeitsschritts b) Befestigen einer Zugvorrichtung (30) an der Außenfläche (10b) der Hülle (10), wobei die Zugvorrichtung (30) eine Verschlussvorrichtung bildet und den gesamten Schlitz (13) hinweg bedeckt.

10. Verfahren nach Anspruch 9, wobei:
- die Zugvorrichtung (30) eine Teleskopstange (32), zwei Rohre (34, 36) und eine Schutzplatte (35) umfasst, wobei die Teleskopstange (32) zwei Arme (32a, 32c) und einen Handgriff (32b), der die Arme (32a, 32c) verbindet, aufweist, wobei die Arme (32a, 32c) der Teleskopstange (32) gleitbar in den Rohren (34, 36) zwischen einer eingefahrenen Position und einer ausgefahrenen Position der Stange (32) montiert sind,
- die Rohre (34, 36) an der Außenfläche (10b) der Hülle (10) befestigt sind und die Längsabschnitte (13a, 13c) des Schlitzes (13) bedecken, und
- die Schutzplatte (35) an der Außenfläche (10b) der Hülle (10) befestigt ist und den Querabschnitt (13b) des Schlitzes (13) bedeckt.

11. Verfahren nach einem der Ansprüche 1 bis 10, umfassend die folgenden Arbeitsschritte:
- Herstellen einer Zugangsöffnung (20) durch Einschneiden in die Hülle (10), und
- Befestigen eines Reißverschlusses (50) in der Zugangsöffnung (20).

12. Verfahren nach einem der vorhergehenden Ansprüche, umfassend die folgenden Arbeitsschritte:
- Herstellen eines Einschnitts (27, 28, 29) durch Einschneiden in die Hülle (10),
- Einführen eines Befestigungsabschnitts (52a, 52b; 56a) eines Accessoires (52, 56) durch den Einschnitt (27, 28, 29),
- Auftragen von Klebstoff zwischen dem Befestigungsabschnitt (52a, 52b; 56a) des Accessoires (52, 56) an dem Gehäuse (10), und
- Annähen (53) des Befestigungsabschnitts (52a, 52b; 56a) des Accessoires (52, 56) an das Gehäuse (10) in der Nähe des Einschnitts (27, 28, 29).

13. Verfahren nach einem der Ansprüche 11 und 12, wobei die Hülle (10) durch Ultraschall geschnitten wird.

## Claims

1. Method for creating a luggage bag (1), said method comprising the following operations:
a) creating a one-piece casing (10) having an inner surface (10a) and an outer surface (10b), the casing being flexible, the casing having a housing (12) and a flap (14), the flap (14) being designed for placement in a folded-in position in which the casing has an interior volume (11) and a slit (13) extending between the housing (12) and the flap (14), the slit (13) being one continuous slit, the casing (10) being entirely created by knitting, using at least one structural yarn (22, 23), and
b) attaching a sealing device (30) on the housing (12) and the flap (14), at the slit (13).

2. Method according to claim 1, wherein the at least one structural yarn (22, 23) is knitted with a first density in a first area (16) of the casing (10) and the at least one structural yarn (22, 23) is knitted with a second density in a second area (18) of the casing (10), the second density being greater than the first density, preferably substantially twice the first density.

3. Method according to any one of claims 1 and 2, wherein the creation of the casing during operation a) comprises the use of two structural yarns (22, 23) of different colors.

4. Method according to any one of claims 1 to 3, wherein:
- creating the casing (10) during operation a) comprises the use of a thermoplastic polymer (26), preferably copolyester or copolyamide, then
- thermoforming the casing (10).

5. Method according to any one of claims 1 to 4, wherein creating the casing (10) during operation a) comprises the use of a polyamide structural material (22).

6. Method according to any one of the claims 1 to 5, wherein creating the casing during operation a) comprises:
- creating the housing (12) with a main face (2), a first longitudinal face (3), a second longitudinal face (4), a first transverse face (5), and a second transverse face (6),
- creating the flap (14) in substantially flat form, and
- the flap (14) is designed to be placed in an open position in which the flap (14) is substantially in the extension of the second transverse face (6) and in the folded-in position, the slit (13) extending around the flap (14) and only along the first longitudinal face (3), the second longitudinal face (4), and the first transverse face (5),.

7. Method according to any one of claims 1 to 6, wherein, during operation b), a rigid shell (40) is fixed to the housing (12) and to the flap (14), on each side of the slit (13), over the entire slit (13).

8. Method according to claim 7, wherein the rigid shell (40) is fixed to the inner surface (10a) of the casing (10).

9. Method according to any one of claims 1 to 8, comprising:
- during operation a) creating the slit (13) in a U-shape comprising two longitudinal portions (13a, 13c) connected by a transverse portion (13b), and
- during operation b), fixing a pulling device (30) on the outer surface (10b) of the casing (10), the pulling device (30) forming a sealing device and covering the entire slit (13).

10. Method according to claim 9, wherein:
- the pulling device (30) comprises a telescopic bar (32), two tubes (34, 36), and a protective plate (35), the telescopic bar (32) has two arms (32a, 32c) and a handle (32b) connecting the arms (32a, 32c), the arms (32a, 32c) of the telescopic bar (32) being mounted in the tubes (34, 36) so as to slide between a folded position and an extended position of the bar (32),
- the tubes (34, 36) are fixed on the outer surface (10b) of the casing (10) and cover the longitudinal portions (13a, 13c) of the slit (13), and
- the protective plate (35) is fixed on the outer surface (10b) of the casing (10) and covers the transverse portion (13b) of the slit (13).

11. Method according to any one of claims 1 to 10, comprising the following operations:
- creating an access opening (20) by cutting into the casing (10), and
- attaching a zipper (50) in the access opening (20).

12. Method according to any one of the preceding claims, comprising the following operations:
- making an incision (27, 28, 29) by cutting into the casing (10),
- inserting an attachment portion (52a, 52b, 56a) of an accessory (52, 56), through the incision (27, 28; 29),
- depositing glue between the attachment portion (52a, 52b; 56a) of the accessory (52, 56) and the casing (10), and
- sewing (53) the attachment portion (52a, 52b; 56a) of the accessory (52, 56) to the casing (10), near the incision (27, 28, 29).

13. Method according to any one of claims 11 to 12, wherein the casing (10) is cut by ultrasound.
